# EUROPÄISCHE PATENTSCHRIFT

(11) **EP 0 485 762 B1**
(45) Veröffentlichungstag und Bekanntmachung des Hinweises auf die Patenterteilung: **07.09.1994**
(21) Anmeldenummer: 91117807.7
(22) Anmeldetag: 18.10.1991
(51) Int. Cl.: B65B 59/00

(54) **Fördereinrichtung in Verpackungsmaschinen**
Conveying device in packaging machines
Dispositif de transport dans des machines d'emballage

(30) Priorität: 16.11.1990 DE 4036510
(43) Veröffentlichungstag der Anmeldung: 20.05.1992
(73) Patentinhaber: ROBERT BOSCH GMBH, 70442 Stuttgart (DE)
(72) Erfinder: Dietrich, Walter, W-7056 Weinstadt (DE); Krieger, Eberhard, Dipl.-Ing., W-7056 Weinstadt (DE); Weber, Siegfried, Dipl.-Ing., W-7062 Rudersberg (DE)

(56) Entgegenhaltungen:
- DE-B- 1 222 845
- US-A- 3 509 681

## Beschreibung

### Stand der Technik

Die Erfindung geht aus von einer Fördereinrichtung für Gegenstände in Verpackungsmaschinen, insbesondere für Faltschachteln in Kartoniermaschinen, nach der Gattung des Oberbegriffs des Anspruchs 1. Zum Einstellen der Fördereinrichtung auf verschiedene Formatgrößen von Faltschachteln ist es aus der US-A-3 509 681 bekannt, die die vorauslaufenden Mitnehmer tragende Förderkette relativ zu den die nachlaufenden Mitnehmer tragenden Förderketten durch Verdrehen der diese tragenden Zahnräder um einen bestimmten Winkel zueinander in ihrer Phasenlage zu verstellen. Dazu ist wenigstens ein Kettenrad auf einer Zentralwelle drehfest und die beiden axial neben diesem angeordneten Zahnräder durch eine Kupplung mit der Zentralwelle verbindbar angeordnet. Bei gelöster Kupplung ist ein Verstellen der einen Mitnehmer im Abstand zu den anderen Mitnehmern durch Verdrehen der Zahnräder möglich. Ferner ist bei der bekannten Fördereinrichtung ein Verstellen der Mitnehmer quer zur Förderrichtung durch axiales Verschieben der Kettenräder auf den sie tragenden Wellen möglich, so daß die Mitnehmer auch auf die Länge der zu verarbeitenden Faltschachteln eingestellt werden können.

### Vorteile der Erfindung

Die erfindungsgemäße Fördereinrichtung mit den kennzeichnenden Merkmalen des Anspruchs 1 hat den Vorteil, daß die Verstellung des Abstandes der vorauslaufenden Mitnehmer gegenüber den nachlaufenden Mitnehmern in einfacher Weise ohne Eingriff in die Förderketten der Fördereinrichtung von der Bedienseite vorgenommen werden kann, und daß trotzdem eine seitliche Verstellung der Mitnehmer durchgeführt werden kann.

Durch die in den Unteransprüchen aufgeführten Maßnahmen sind vorteilhafte Weiterbildungen und Verbesserungen der im Anspruch 1 angegebenen Fördereinrichtung möglich. Mit der Anordnung gemäß Anspruch 6 lassen sich die Mitnehmer in einfacher Weise schnell auf ein Formatmaß einstellen.

### Zeichnung

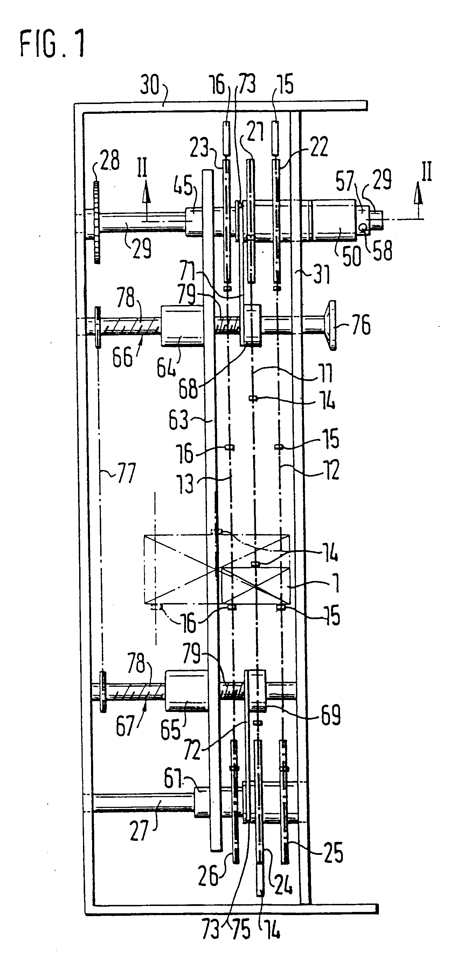

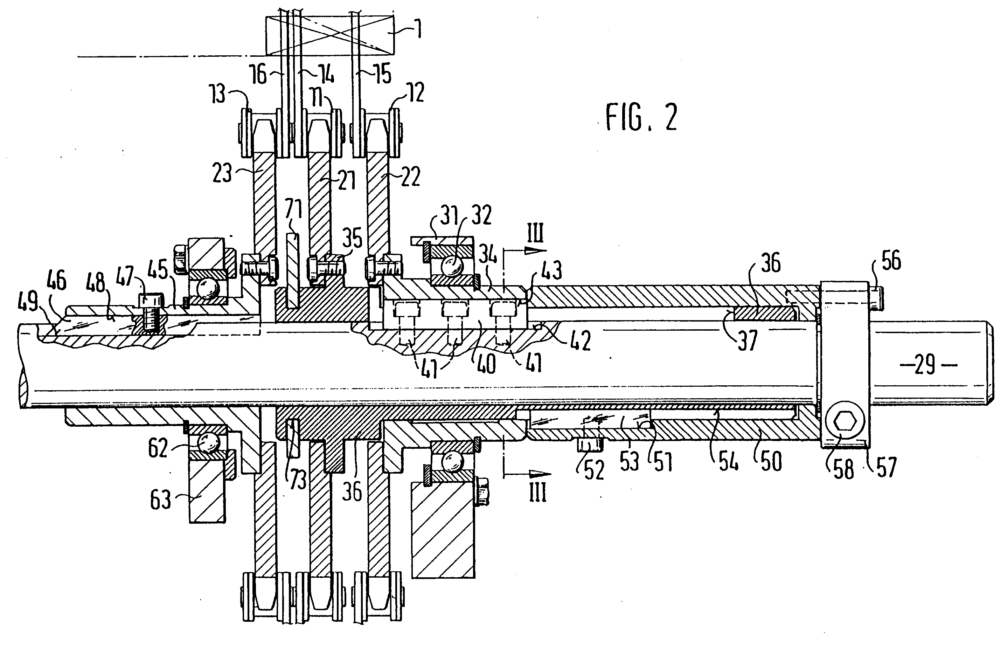

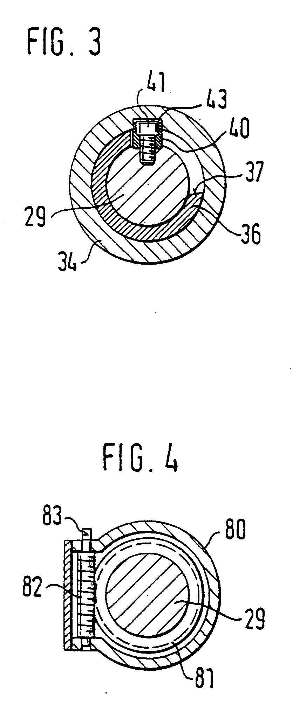

Ein Ausführungsbeispiel der Erfindung ist in der Zeichnung dargestellt und wird im folgenden näher erläutert. Es zeigen Figur 1 die Faltschachtelfördereinrichtung einer Kartoniermaschine vereinfacht in Draufsicht, Figur 2 eine Umlenkstrecke mit Kettenrädern der Fördereinrichtung nach Figur 1 in vergrößertem Maßstab im Längsschnitt in der Ebene II-II der Figur 1, Figur 3 einen Querschnitt in der Ebene III-III der Figur 2 und Figur 4 eine Verstelleinrichtung für die Fördereinrichtung nach Figur 2 im Querschnitt.

### Beschreibung des Ausführungsbeispiels

Eine Fördereinrichtung für Faltschachteln 1 hat drei nebeneinander parallel verlaufende endlose Förderketten 11, 12, 13, die Mitnehmer 14, 15, 16 tragen. Jeweils drei Mitnehmer 14, 15, 16 bilden eine Einheit und führen eine Faltschachtel 1 auf einer geradlinigen waagrechten Förderstrecke, wobei ein vorauslaufender Mitnehmer 14 an der vorderen Wand und zwei nachlaufende Mitnehmer 15, 16 an der hinteren Wand der Faltschachtel 1 anliegen. Die endlosen Förderketten 11, 12, 13 laufen um zwei Umlenkstrecken, wo sie auf koaxialen Kettenrädern 21, 22, 23 und 24, 25, 26 geführt werden. Die Kettenräder 24, 25, 26 der einen Umlenkstrecke sind frei drehbar und axial verschiebbar auf einer Achse 27 gelagert. Dagegen sind die Kettenräder 21, 22, 23 antriebsfest mit einer über ein Zahnrad 28 angetriebenen zentralen Welle 29 verbunden.

Zum Verstellen des Abstandes zwischen dem einen Mitnehmer 14 und den beiden anderen Mitnehmern 15, 16 einer Einheit zum Anpassen an die Breite des zu verarbeitenden Formats von Faltschachteln 1 ist das mittlere Kettenrad 21, welches die Förderkette 11 mit den vorauslaufenden Mitnehmern 14 führt, relativ zu den beiden äußeren Kettenrädern 22, 23, welche die beiden Förderketten 12, 13 mit den nachlaufenden Mitnehmern 15, 16 führen, in seiner Winkel- oder Phasenlage ver- und einstellbar. Das eine äußere Kettenrad 22, das der Bedienseite naheliegt, ist mit einer Nabe 34 fest verbunden, die mittels eines Kugellagers 32 in einer Wand 31 des Maschinengestells 30 ortsfest drehbar gelagert ist. Das mittlere Kettenrad 21 ist an einem Bund 35 einer Hohlwelle 36 befestigt, welche die Nabe 34 des einen Kettenrades 22 durchsetzt und in dieser verdrehbar gelagert ist sowie selber die zentrale Welle 29 drehbar aufnimmt. Die Hohlwelle 36 hat im Deckungsbereich der Nabe 34 des Kettenrades 22 einen Durchbruch 37, der sich axial um das Mehrfache dieses Deckungsbereichs und im Umfang in einem Winkel im Bereich von etwa 100 Grad erstreckt. Durch diesen Durchbruch 37 ragt eine Paßfeder 40, die mit Schrauben 41 in einer Längsnut 42 in der Welle 29 befestigt ist und in eine Längsnut 43 in der Nabe 34 greift, so daß das eine äußere Kettenrad 22 verdrehfest mit der Welle 29 verbunden ist. Das andere äußere Kettenrad 23 ist ebenfalls verdrehfest mit der zentralen Welle 29 verbunden, aber auf dieser auch axial verschiebbar. Dazu ist dieses Kettenrad 23 fest mit einer Nabe 45 verschraubt, die auf der Welle 29 axial verschiebbar ist und mit einer Paßfeder 46 gegen Verdrehen gesichert ist, welche mit einer Schraube 47 in einer Längsnut 48 in der Nabe 45 befestigt ist und in eine Längsnut 49 in der Welle 29 greift. Um das Kettenrad 23 axial auf der Welle 29 verschieben zu können, beträgt die Länge der Längsnut 49 in der Welle 29 ein Mehrfaches der Länge der Paßfeder 46.

Die Hohlwelle 36 mit dem mittleren Zahnrad 21 ist ebenfalls auf der zentralen Welle 29 axial verschiebbar und zusätzlich um einen Winkel drehbar, wie dies ihr Durchbruch 37 in Relation zu der Paßfeder 40 zuläßt. Um sie mit der Welle 29 drehfest zu verbinden, ist sie von einer Hülse 50 umgriffen, die in einer inneren Längsnut 51 eine von einer Schraube 52 gehaltene Paßfeder 53 trägt, welche in eine äußere Längsnut 54 der Hohlwelle 36 eingreift. Die Längsnut 54 erstreckt sich über den gesamten, über die Nabe 34 vorstehenden Teil der Hohlwelle 36, so daß die Hohlwelle 36 axial zur Hülse 50 verschiebbar ist.

An der Stirnseite der Hülse 50, die axial an die Nabe 34 des einen äußeren Kettenrades 22 anschließt und sich zur Bedienseite hin über der Welle 29 erstreckt, ist mit einer Schraube 56 ein Klemmring 57 befestigt, der mit einer Schraube 58 auf dem Ende der Welle 29 festgeklemmt ist. Bei gelöster Schraube 58 kann durch Verdrehen der Hülse 50 über die Hohlwelle 36 das mittlere Kettenrad 21 relativ zu den beiden äußeren Kettenrädern 22, 23 verdreht werden, so daß das Kettenrad 21 die Förderkette 11 verfährt und damit der Abstand der vorauslaufenden Mitnehmer 14 gegenüber den nachlaufenden Mitnehmern 15, 16 vergrößert oder verkleinert wird, um diese an die Breite der zu verarbeitenden Faltschachteln 1 anzupassen.

Um auch den Abstand der nebeneinander verlaufenden Mitnehmer 14, 15, 16 an die Länge der Faltschachteln 1 anpassen zu können, sind die einzelnen Förderketten 11, 12, 13 mit den sie führenden Kettenrädern 21, 22, 23 und 24, 25, 26 relativ zueinander und quer zur Förderrichtung verstellbar. Dazu sind die von der Bedienseite wegliegenden Kettenräder 22, 23, und 24, 26 axial verschiebbar auf der Welle 29 und der Achse 27 angeordnet, wohingegen die der Bedienseite naheliegenden Kettenräder 22 und 25 ortsfest sind. Die anderen äußeren Kettenräder 23, 26 tragen auf ihren Naben 45, 61 über Kugellager 62 eine parallel zur Förderkette 13 angeordnete Wange 63 mit Gewindestutzen 64, die mittels zweiter im Maschinengestell 30 gelagerter Schraubspindeln 66, 67 quer verstellbar ist. Die mittlere Föderkette 11 wird ebenfalls mit den beiden Schraubspindeln 66, 67 verstellt, die zusätzlich zwei Gewindemuffen 68, 69 mit Gabeln 71, 72 tragen, welche in eine Umfangsnut 73 in der Nabe 35 beziehungsweise 75 der Kettenräder 21, 24 eingreifen. Zum gleichzeitigen Drehen der beiden Schraubspindeln 66, 67 hat die eine Schraubspindel 66 ein Handrad 76 und beide Schraubspindeln 66, 67 sind miteinander durch einen Kettentrieb 77 gekoppelt. Damit beim Querverstellen der Förderketten 11, 13 der seitliche Abstand der Mitnehmer 14, 15, 16 in allen Formatstellungen etwa gleich ist, ist die Steigung des die Stutzen 64, 65 der Wange 63 tragenden Gewindeteils 78 doppelt so groß wie die Steigung des die Gewindemuffen 68, 69 der Gabeln 71, 72 tragenden Gewindeteils 79.

Das Einstellen der Fördereinrichtung auf ein gegebenes Format der zu verarbeitenden Faltschachteln 1 wird folgendermaßen durchgeführt:
Ausgehend von beispielsweise der in Figur 1 dargestellten Einstellung für das kleinste Format, bei dem die Förderketten 11, 12, 13 am nächsten nebeneinander liegen und der Abstand der vorauslaufenden Mitnehmer 14 zu den nachlaufenden Mitnehmern 15, 16 am geringsten ist, werden zunächst durch Drehen am Handrad 76 die beiden Förderketten 11 und 13 in die gewünschte Stellung nach links gefahren (größtmöglicher seitlicher Abstand in Figur 1 strichpunktiert dargestellt). Die Einstellung kann an einer nicht dargestellten Skala abgelesen werden. Es können auch die Anzahl der Umdrehungen vorgegeben werden, wobei der einzustellende Wert an einem mit der Schraubspindel 66 verbundenen Zähler abgelesen wird. Anstelle der Handverstellung ist auch eine Verstellung mittels eines Stellmotors möglich, der für die Einstellung bestimmter Formate von einem Rechner unterstützt gesteuert wird.

Zum Einstellen der Mitnehmer 14, 15, 16 auf die Breite der zu verarbeitenden Faltschachteln 1 wird zunächst der Klemmring 57 durch Lösen der Schraube 58 entspannt, so daß die Drehverbindung mit der Welle 29 aufgehoben wird. Danach wird die Hülse 50 verdreht, die über die Paßfeder 53 die Hohlwelle 36 mit deren Bund 35 und das mittlere Kettenrad 21 mitdreht, so daß die mittlere Förderkette 11 mit den vorauslaufenden Mitnehmern 14 gegenüber den nachlaufenden Mitnehmern 15, 16 verstellt wird. Nach Einstellen des gewünschten Abstandes wird der Klemmring 57 wieder gespannt, so daß wieder eine drehfeste Verbindung zwischen der Welle 29 und der Hülse 50 hergestellt ist. Der Bereich der Formateinstellbarkeit ist im wesentlichen begrenzt durch den Öffnungswinkel und die Länge des Durchbruchs 37 in der Hohlwelle 36, durch den die Paßfeder 40 für die Verbindung des einen äußeren Kettenrades 22 mit der Welle 29 ragt.

Die Einstellung des Abstandes der Mitnehmer 14 zu den Mitnehmern 15, 16 kann auch mittels eines selbsthemmenden Verstellgetriebes vorgenommen werden, das beispielsweise in Figur 4 dargestellt ist. Dazu ist anstelle des Klemmringes 57 an der Stirnseite der Hülse 50 ein ringförmiges Gehäuse 80 festgeschraubt, das ein auf der Welle 29 befestigtes Schneckenrad 81 umgibt. Mit diesem Schneckenrad 81 kämmt tangential eine im Gehäuse 80 gelagerte Schneckenspindel 82, deren eines Ende aus dem Gehäuse ragt und einen Schlüsselkopf 83 hat. Durch Drehen der Schneckenspindel 82 wird das Gehäuse 80 gedreht, so daß mit diesem über die Hülse 50, die Hohlwelle 36 und das mittlere Kettenrad 21 sowie die mittlere Förderkette 11 mit den vorauslaufenden Mitnehmern 14 verstellt werden. Wie oben erwähnt, kann auch hier durch eine vorgegebene bestimmte Anzahl von Umdrehungen der Schneckenspindel 82 der Abstand der Mitnehmer 14 eingestellt werden. Am Gehäuse 80 kann auch ein Stellmotor vorgesehen werden, mit dem die Formatumstellung von einem Rechner unterstützt, gesteuert werden kann.

## Patentansprüche

1. Fördereinrichtung für Gegenstände in Verpackungsmaschinen, insbesondere für Faltschachteln in Kartoniermaschinen, mit mehreren in gleichen Abständen laufenden Mitnehmern (14, 15, 16), von denen vorauslaufende und nachlaufende Mitnehmer einer Einheit einen Gegenstand formhaltig führen, mit die Mitnehmer tragenden, endlosen Förderketten (11, 12, 13), die wenigstens auf einer Umlenkstrecke auf Kettenrädern (21-26) geführt sind, wobei zum Einstellen des Abstandes der vorauslaufenden Mitnehmer (14) zu den nachlaufenden Mitnehmern (15, 16) die Kettenräder auf einer diese tragenden Welle (29) relativ zueinander drehwinkelverstellbar sind, dadurch gekennzeichnet, daß ein erstes und ein zweites axial äußeres Kettenrad (22, 23), welche die Förderketten (12, 13) mit gleichwirkenden Mitnehmern (15, 16) führen, drehfest mit einer Zentralwelle (29) verbunden sind, daß ein mittleres zwischen den äußeren Kettenrädern (22, 23) angeordnetes Kettenrad (21) mit einer auf der Zentralwelle verdrehbaren Hohlwelle (36) fest verbunden ist, daß die Hohlwelle (36) das erste äußere Kettenrad (22) durchsetzt und einen großwinkligen Durchbruch (37) für den Durchtritt des das erste äußere Kettenrad mit der zentralen Welle (29) verbindenden Verbindungsmittels (40) hat und daß die zentrale Welle (29) und die Hohlwelle (36) drehwinkelverstellbar miteinander verbindbar sind.

2. Fördereinrichtung nach Anspruch 1, dadurch gekennzeichnet, daß das das erste äußere Kettenrad (22) mit der zentralen Welle (29) verbindende Verbindungsmittel (40) in eine Aussparung (43) des Kettenrades (22) und in eine Aussparung (42) in der Welle (29) eingreift und den Durchbruch (37) der Hohlwelle (36) durchsetzt.

3. Fördereinrichtung nach Anspruch 2, dadurch gekennzeichnet, daß sich der Durchbruch (37) in der Hohlwelle (36) über einen Umfangswinkel erstreckt, der das Mehrfache der Breite des Verbindungsmittels (40) beträgt.

4. Fördereinrichtung nach einem der Ansprüche 1 bis 3, dadurch gekennzeichnet, daß das erste äußere Kettenrad (22) ortsfest zu der zentralen Welle (29) angeordnet ist, daß das zweite äußere Kettenrad (23) auf der zentralen Welle (29) axial verschiebbar ist, und daß die Axialerstreckung des Durchbruchs (37) der Hohlwelle (36) ein Mehrfaches der axialen Erstreckung des Verbindungsmittels (40) beträgt.

5. Fördereinrichtung nach Anspruch 4, dadurch gekennzeichnet, daß der das erste äußere Kettenrad (22) durchgreifende Teil der Hohlwelle (36) von einer Hülse (50) umgeben und durch ein Verbindungsmittel (53) mit dieser drehfest, aber axial verstellbar verbunden ist, und daß die Hülse (50) über ein Verbindungsmittel (57; 80 bis 82) mit der zentralen Welle (29) winkelverstellbar verbunden ist.

6. Fördereinrichtung nach Anspruch 5, dadurch gekennzeichnet, daß das Verbindungsmittel zwischen der Hülse (50) und der zentralen Welle (29) ein selbsthemmendes Verstellgetriebe (80 bis 82) ist.

## Claims

1. Conveying mechanism for objects in packing machines, especially for folding cartons in cartoning machines, having a plurality of dogs (14, 15, 16) running at equal spacings, of which leading and trailing dogs of a unit guide an object, in a shape-preserving manner, using continuous conveying chains (11, 12, 13) which support the dogs and are guided, at least on one deflecting section, on chain wheels (21-26), wherein, for the adjustment of the distance of the leading dogs (14) from the trailing dogs (15, 16), the chain wheels can be adjusted relative to one another, in their angle of rotation, on a shaft (29) supporting them, characterized in that a first and a second axially outer chain wheel (22, 23), which chain wheels guide the conveying chains (12, 13) by means of equally acting dogs (15, 16), are connected in rotationally secure arrangement to a central shaft (29), in that a middle chain wheel (21) disposed between the outer chain wheels (22, 23) is fixedly connected to a hollow shaft (36) which is rotatable on the central shaft, in that the hollow shaft (36) passes through the first outer chain wheel (22) and has a large-angled aperture (37) for the passage of the connecting means (40) connecting the first outer chain wheel to the central shaft (29), and in that the central shaft (29) and the hollow shaft (36) can be interconnected such that they are adjustable in their angle of rotation.

2. Conveying mechanism according to Claim 1, characterized in that the connecting means (40) connecting the first, outer chain wheel (22) to the central shaft (29) engages in a recess (43) in the chain wheel (22) and in a recess (42) in the shaft (29) and passes through the aperture (37) in the hollow shaft (36).

3. Conveying mechanism according to Claim 2, characterized in that the aperture (37) in the hollow shaft (36) extends over a peripheral angle measuring a multiple of the width of the connecting means (40).

4. Conveying mechanism according to one of Claims 1 to 3, characterized in that the first, outer chain wheel (22) is disposed in positionally fixed arrangement relative to the central shaft (29), in that the second, outer chain wheel (23) is axially displaceable on the central shaft (29), and in that the axial extent of the aperture (37) of the hollow shaft (36) measures a multiple of the axial extent of the connecting means (40).

5. Conveying mechanism according to Claim 4, characterized in that that part of the hollow shaft (36) reaching through the first outer chain wheel (22) is surrounded by a sleeve (50) and is connected by a connecting means (53) to the said sleeve in rotationally secure, but axially displaceable arrangement, and in that the sleeve (50) is connected by connecting means (57; 80 to 82) to the central shaft (29) in such a way that it can be angularly adjusted.

6. Conveying mechanism according to Claim 5, characterized in that the connecting means between the sleeve (50) and the central shaft (29) is a self-locking adjusting gear (80 to 82).

## Revendications

1. Dispositif pour transporter des objets dans des machines d'emballage, en particulier des boîtes pliantes dans des machines d'encartonnage, comprenant plusieurs entraîneurs (14, 15, 16) circulant avec des espacements mutuels égaux et constituant respectivement des entraîneurs antérieurs et postérieurs formant chaque fois un ensemble pour guider un objet avec conservation de sa forme, des chaînes transporteuses sans fin (11, 12, 13), portant les entraîneurs, qui sont guidées, au moins dans un tronçon de renvoi, sur des roues à chaînes (21 - 26), dispositif dans lequel, pour l'ajustement de la distance entre les entraîneurs antérieurs (14) et les entraîneurs postérieurs (15, 16), les roues à chaînes sont mutuellement réglables angulairement sur un arbre (29) qui les porte, caractérisé en ce qu'une première et une seconde roue à chaîne axialement extérieures (22, 23), guidant les chaînes transporteuses (12, 13) portant des entraîneurs (15, 16) ayant des actions identiques, sont solidarisées en rotation avec un arbre central (29), qu'une roue à chaîne médiane (21), disposée entre les roues à chaînes extérieures (22, 23), est reliée rigidement à un arbre creux(36) monté rotatif autour de l'arbre central, que l'arbre creux (36) traverse la première roue à chaîne extérieure (22) et possède un ajour (37) de grand angle pour le passage du moyen de liaison (40) reliant la première roue à chaîne extérieure à l'arbre central (29), et que l'arbre central (29) et l'arbre creux (36) peuvent être reliés entre eux avec la possibilité d'un réglage angulaire l'un par rapport à l'autre.

2. Dispositif de transport selon la revendication 1, caractérisé en ce que le moyen de liaison (40) reliant la première roue à chaîne extérieure (22) à l'arbre central (29), traverse l'ajour (37) de l'arbre creux (36) et pénètre dans un évidement (43) de la première roue à chaîne extérieure (22) et dans un évidement (42) de l'arbre central (29).

3. Dispositif de transport selon la revendication 2, caractérisé en ce que l'ajour (37) ménagé dans l'arbre creux (36), s'étend sur un angle périphérique correspondant à un multiple de la largeur du moyen de liaison (40).

4. Dispositif de transport selon une des revendications 1 à 3, caractérisé en ce que la première roue à chaîne extérieure (22) est disposée fixe par rapport à l'arbre central (29), que la seconde roue à chaîne extérieure (23) est disposée axialement déplaçable sur l'arbre central (29) et que l'étendue axiale de l'ajour (37) de l'arbre creux (36) correspond à un multiple de l'étendue axiale du moyen de liaison (40).

5. Dispositif de transport selon la revendication 4, caractérisé en ce que la partie de l'arbre creux (36) traversant la première roue à chaîne extérieure (22) est entourée d'une douille (50) et reliée solidaire en rotation, mais axialement déplaçable, à celle-ci par un moyen de liaison (53), et que la douille (50) est reliée à l'arbre central (29) avec la possibilité d'un réglage angulaire par un moyen de liaison (57; 80 à 82).

6. Dispositif de transport selon la revendication 5, caractérisé en ce que le moyen de liaison entre la douille (50) et l'arbre central (29) est un mécanisme de réglage autobloquant (80 à 82).
